# EUROPEAN PATENT APPLICATION

(11) **EP 1 901 493 A1**
(43) Date of publication of application: **19.03.2008**
(21) Application number: 06425633.2
(22) Date of filing: 14.09.2006
(51) Int. Cl.: H04L 12/56

(54) **Controlling congestion over a non-serving branch**

(71) Applicant: Siemens S.p.A., 20126 Milano (IT)
(72) Inventor: Malafronte, Gennaro Ciro, 80050 Casola di Napoli (IT)

(57) **Abstract**

The present invention is a method and a system for controlling congestion over a non-serving branch (12, 13) in a cellular telecommunication system, comprising one serving base station (NB1) and at least one non-serving base station (NB2, NB3); the base stations (NB1, NB2, NB3) transmitting data frames with a given pattern of the sequence of frame sequence numbers (FSN) contained in headers (H) of the transmitted data frames;
the invention further comprising:
- by a serving radio network controller (SRNC), detecting a congestion over a congested branch (I1, 12, I3);
- by the serving radio network controller (SRNC), notifying the concerned base station (NB1, NB2, NB3) associated with the congested branch (I1, I2, I3) about the detected congestion;
- if the congested branch (12, 13) is non-serving, by the concerned non-serving base station (NB2, NB3), reducing the uplink rate over the congested branch (12, 13) by discarding data packets to be transmitted; and
- by the concerned non-serving base station (NB2, NB3), ensuring that the given pattern of the sequence of frame sequence numbers (FSN) of transmitted frames is not interrupted.

## Description

The present invention relates to a method according to the preamble of claim 1 and to a system according to the preamble of claim 4.

In third generation cellular telecommunications systems, a user equipment or mobile station may have multiple simultaneous radio links with multiple base stations or Nodes B, respectively. As a consequence to the presence of multiple Nodes B, to the serving radio network controller (SRNC) may arrive multiple branches, one for each Node B. The branches arriving to the SRNC may be either Iub or Iur interfaces, depending if the SRNC is connected directly to the Node B or if it is connected via a drift RNC.

A typical situation of the above described scenario occurs when macro diversity is present. Macro diversity is typically used for improving the quality of the radio connections and/or for providing seamless handover capabilities.

In industry specifications 3GPP TS25.427 [1], TS25.309 [2] and TR25.902 [3] defining state of the art 3GPP systems, methods for performing E-DCH congestion control are described.

In a preferred implementation of state of the art 3GPP systems, the uplink traffic of serving radio links on Iub/Iur interfaces is advantageously protected from traffic of non-serving radio links in case of congestion.

A serving radio link for a user equipment is the radio link, over the radio interface, with the serving cell. The serving cell for the user equipment, in case of E-DCH, is typically selected according to some standard proceedings.

A Node B is the serving Node B for a user equipment when it contains the serving cell for that user equipment.

A serving Iub/Iur branch is an Iub/Iur interface connecting the serving Node B, for a user equipment, to the radio network controller (RNC).

For the E-DCH case, macro diversity is a functionality of the MAC-es protocol layer, in which the Serving RNC just selects/combines the received frames related to the same user equipment coming from different Nodes B.

In macro diversity, where a plurality of Nodes B are present, only one Node B is a serving base station while the remaining Nodes B are non-serving base stations.

In state of the art 3GPP systems, in case of congestion, the Iub/Iur interface rate of each MAC-d flow is to be reduced.

Unfortunately, the methods for E-DCH congestion control defined in the above mentioned industry specifications [1], [2] and [3] do not define the steps to be performed in case there are more than one Nodes B, as it is the case with macro diversity.

More in particular, there are no methods that disclose how to perform Iub/Iur congestion control for High Speed Uplink Packet Access in non serving Nodes B.

In fact, as described in the above mentioned industry specification TS25.427 [1], in case the SRNC detects a congestion over one Iub/Iur branch, the SRNC is required to send a TNL Congestion Indication to the congested Node B irrespectively of the fact the Node B is serving or not and irrespective of the fact that the other branches may not be in a congested state.

In case the congestion is detected on a non serving Iub/Iur branch, the non-serving Node B is required to "reduce the bit rate for at least the MAC-d flow on which the congestion indication control frame was received", as described in the above mentioned industry specification TS25.427 [1].

Moreover, since according to sec.9.1 of the above mentioned industry specification TS25.309 [2], "the non-serving Node-B is allowed to send a DOWN command only for RoT reasons", the non serving Node B is not allowed to send a DOWN command to the user equipment over the Uu interface in an event of congestion over a non-serving Iur/Iub branch.

Thus, in case of congestion over a non-serving Iur/Iub branch, the non-serving Node B is required to reduce the uplink E-DCH rate for the congested MAC-d flow.

It is therefore the aim of the present invention to provide a method and a system for controlling congestion over a non-serving branch of a cellular telecommunications system, in particular by enabling the non-serving NodeB to reduce the uplink E-DCH rate without sending a DOWN command that reduces the rates over the Uu radio interface.

The aforementioned aim is achieved by a method and a system for controlling congestion over a non-serving branch in a cellular telecommunication system, in which a mobile station has at least two radio links connecting to at least two respective base stations;
the at least two base stations being connected to a serving radio network controller via at least two respective branches; the at least two base stations having the function of one serving base station and at least one non-serving base station; the base stations transmitting data frames with a given pattern of the sequence of frame sequence numbers contained in headers of the transmitted data frames; the invention comprising:
- by the serving radio network controller, detecting a congestion over a congested branch;
- by the serving radio network controller, notifying the concerned base station associated with the congested branch about the detected congestion;
the invention characterized in that it further comprises:
a) if the congested branch is non-serving, by the concerned non-serving base station, reducing the uplink rate over the congested branch by discarding data packets to be transmitted; and
b) by the concerned non-serving base station, ensuring that the given pattern of the sequence of frame sequence numbers of transmitted frames is not interrupted.

In the invention item a) may be conveniently performed by discarding data packets only from the payload of a frame or by discarding whole frames.

The proposed invention reduces the uplink E-DCH rate for the congested branch without reducing the rate over the Uu radio interface, by discarding the MAC-d flow packets associated to the non-serving radio link.

Moreover, in the proposed invention, the discard of MAC-d flow packets over the congested non-serving Iub/Iur branch is performed in such a way that the SRNC is not consequently triggering a new congestion control message due to packet discard. In fact, the SRNC typically detects congestion at the Iub/Iur branch by checking for packet loss at the FP level and, in the present invention, the MAC-d flow packet discard is performed in a manner that no FP packet loss is detected by the SRNC.

This advantage is obtained by ensuring that the pattern of the frame sequence numbers FSN of the transmitted frames is not interrupted.

The invention will now be described in preferred but not exclusive embodiments with reference to the accompanying drawings, wherein:
- Figure 1: schematically illustrates a block diagram of an example cellular system with macro diversity;
- Figure 2: schematically illustrates a sequence of frame sequence numbers and discarded packets according to a further example embodiment of the present invention;
- Figure 3: schematically illustrates a sequence of frame sequence numbers and discarded packets according to an example embodiment of the present invention;
- Figure 4: schematically illustrates a structure of a E-DCH uplink data frame.

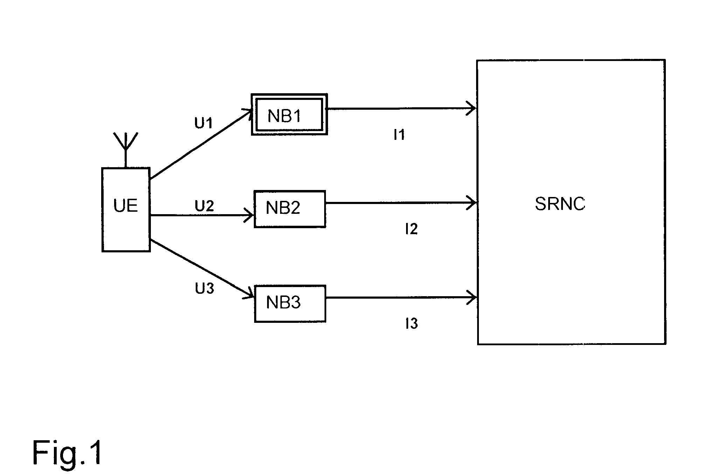

Figure 1 shows a cellular system in a macro diversity state, in which a mobile station UE has three radio links U1, U2, U3 with three respective base stations or Nodes B NB1, NB2, NB3.

The three Nodes B NB1, NB2, NB3 comprise one serving Node B NB1, marked with a double line, and two non-serving Nodes B NB2, NB3.

The three Nodes B NB1, NB2, NB3 are connected via their respective branches I1, I2, I3 to the serving radio network controller SRNC.

The branches I1, I2, I3, arriving at the serving radio network controller SRNC, may be either Iub or Iur links, depending if the serving radio network controller SRNC is connected directly to the Nodes B NB1, NB2, NB3 or if it is connected via drift RNCs.

A serving branch I1 is the Iub/Iur link that connects the E-DCH serving radio link set with the serving radio controller SRNC. The E-DCH serving radio link set are the E-DCH radio links of the serving Node B NB1 having the serving E-DCH cell. A non-serving branch 12, 13 is an Iub/Iur link that connects the radio link set of a non-serving Node B NB2, NB3 not containing the serving cell with the serving radio controller SRNC.

The skilled in the art easily understands that the number of non serving branches in a macro diversity case may be different than two.

The serving radio network controller SRNC may detect, at the frame protocol level, congestion in one of the Iub/ Iur links I1, I2, I3.

When congestion is detected in a Iub/Iur branch I1, I2, I3, the serving radio network controller SRNC sends a TNL Congestion Indication message in downlink to the concerned Node B NB1, NB2, NB3.

When the congested branch I1, I2, I3, is a non-serving branch I2, I3 the concerned Node B NB2, NB3 is required to reduce the uplink E-DCH bit-rate over the congested branch I2, I3, for example, by discarding E-DCH MAC-d flow packets.

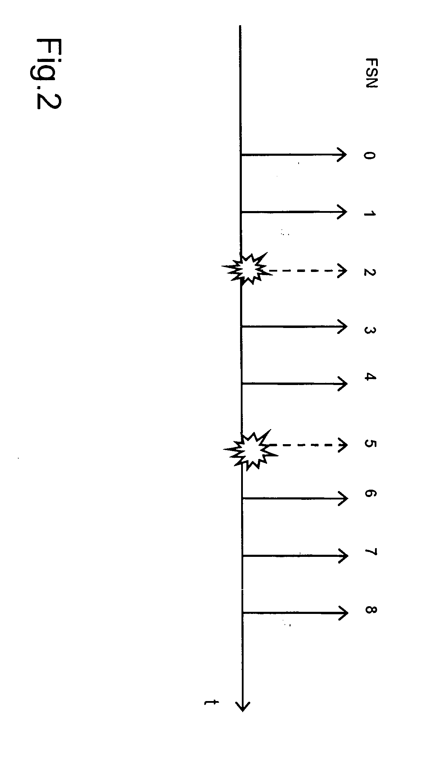

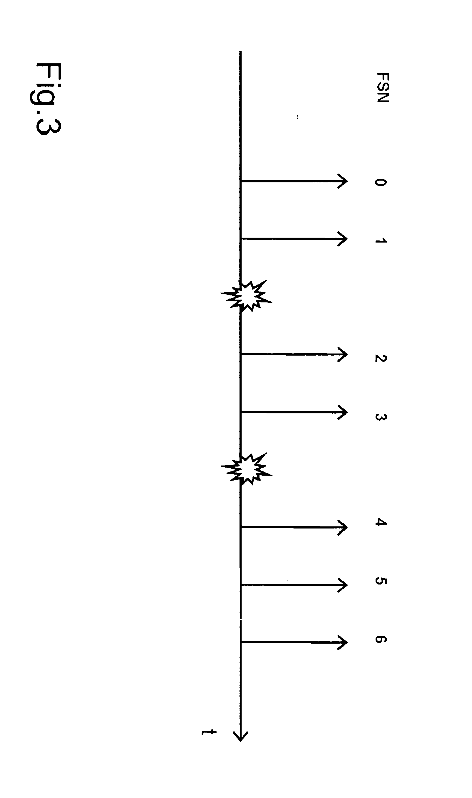

Figures 2 and 3 illustrate two examples of E-DCH uplink packets discards in a non-serving Node B NB2, NB2 according to embodiments of the present invention.

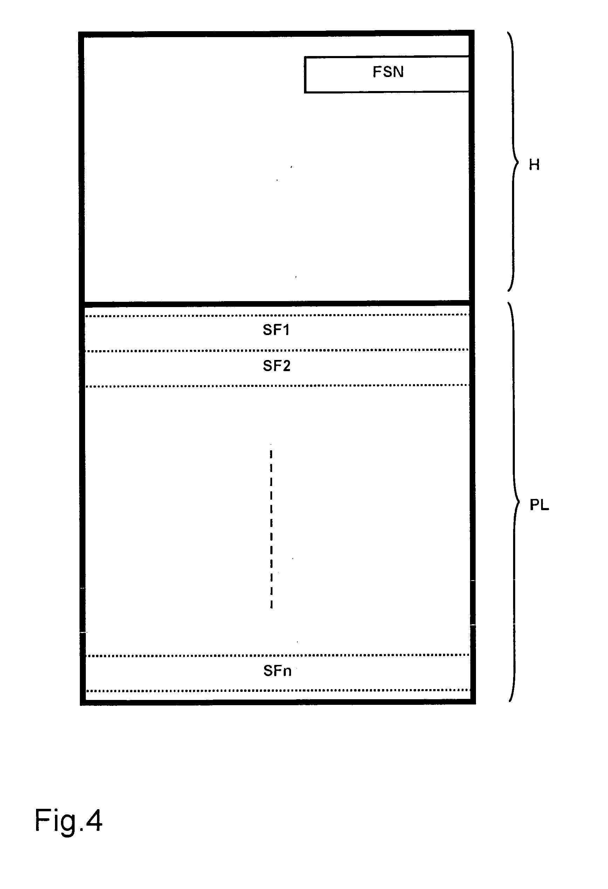

Figure 4 schematically illustrates a structure of an E-DCH uplink data frame. This frame comprises a header H and a payload PL. The payload contains a variable quantity of sub-frames SF1, SF2, SFn. The header H comprises various data fields among which data fields that contain information on the number of sub-frames SF1, SFn present in the payload PL, and information of the number of MAC-es PDUs present in the sub-frames SF1, SFn. Another data field contained in the header H is the frame sequence number field FSN, shown in Figure 4. The frame sequence number FSN is a field 4-bit long which is incremented, modulo 16, for each transmitted data frame.

The frame sequence number field FSN is typically used by the serving radio network controller SRNC to perform packet loss check in order to detect congestion over a congested branch I1, 12, 13. To check for packet loss, the serving radio network controller SRNC may analyse the pattern of the received frame sequence number fields FSN. In fact, when the Node B NB1, NB2, NB3 transmits uplink data packets, it creates a certain pattern of the sequence of the frame sequence number field FSN contained in the headers H of the transmitted frames.

For example, if the pattern is such that Node B increments the frame sequence number field FSN of each subsequent by adding 1, the serving radio network controller SRNC is able to detect a packet loss when the difference between the two sequence number fields FSN of two adjacent supervised frames is different than 1 (or different than 15, being the field incrementation module 16).

When the serving radio network controller SRNC detects congestion over a congested branch I1, I2, I3, it notifies the concerned Node B NB1, NB2, NB3 by sending a TNL congestion indication message.

According to the present invention, if the congested branch is a non-serving branch I2, I3 and, as a consequence, the concerned associated Node B NB2, NB3 is a non-serving radio link set, the concerned non-serving Node B NB2, NB3 reduces the E-DCH uplink bit-rate over the congested link Iub/Iur by discarding data packets to be transmitted. At the same time, according to the present invention, the concerned non-serving Node B NB2, NB3 ensures that the sequence pattern of the frame sequence number fields FSN contained in the headers H of the transmitted frame does not show any interruptions. Advantageously, the serving radio network controller, upon checking for packet loss, by analysing the sequence pattern of the frame sequence number fields SFN of the received frames, is unaware that some packets have been discarded and, consequently, does not send any new TNL congestion indication message to the concerned Node B NB2, NB3.

In a first embodiment according to the present invention, the discarded MAC-d flow packets to be transmitted are taken from the payload PL of the frame, i.e. they are E-DCH MAC-es PDUs. All the subframes SF1, SF2, SFn of the frame payload PL may be discarded or alternatively only some of the subframes SF may be discarded. The non-serving Node B NB2, NB3 performs an internal MAC-es discard and some E-DCH FP PDUs are sent with no MAC-es PDU or with a reduced number of MAC-es PDUs. In this first embodiment, the sequence pattern of the frame sequence number FSN of the transmitted frames does not advantageously show any pattern interruption since the header H of the frame is entirely transmitted. Figure 2 illustrates an example of E-DCH uplink packets discards in a non-serving Node B NB2, NB2 according to a first embodiment of the present invention. In Figure 2, each arrow represents a frame transmitted over the congested branch I2, I3 by the concerned Node B NB2, NB3. The x-axis denote with "t" represent time. The numbers on top of each arrow represent an example of pattern of frame sequence numbers of the transmitted frames: 0, 1, 2, ... to 8. The two blasts below the dashed arrows represent the fact that in these frames payload subframes SF1, SFn are discarded, whereas headers H are transmitted. As it can be seen in Figure 2, the pattern of the frame sequence numbers FSN of the transmitted frame does not show any interruption.

In a second embodiment according to the present invention, the discarded data packets are whole frames, payload PL and header H, i.e. they are E-DCH FP PDUs. The non-serving Node B NB2, NB3 performs an internal MAC-es PDU and E-DCH FP header discard. In this second embodiment, the sequence pattern of the frame sequence number FSN of the transmitted frames does not show any pattern interruption due to the fact that the frame sequence number field FSN is included only when frames are transmitted. Figure 3 illustrates an example of E-DCH uplink frame discards in a non-serving Node B NB2, NB2 according to the second embodiment of the present invention. In Figure 2, the two blasts represent the fact that these frames are fully discarded. As it can be seen in Figure 3, the pattern of the frame sequence numbers FSN of the transmitted frame does not show any pattern interruption. This second embodiment has the advantage over the first embodiment of the present invention that it optimizes bandwidth utilization the Iub/Iur branches 12, 13.

In both embodiments, when packet dropping is performed, the pattern of the frame sequence number fields FSN of the associated transmitted frames is not affected by the MAC-d flow packet dropping since it does not have any sequence interruption within the Node B. For example, in case the pattern is an increment of 1, the frame sequence numbers FSN of the sent frames , during congestion, does not miss any value from the sequence {0..15} otherwise the serving radio network controller SRNC would trigger again another TNL congestion indication message notwithstanding the Iub/Iur rate reduction.

In further embodiments of the present invention, the pattern of the frame sequence number fields FSN of the transmitted frames may have incremental steps different than 1 as shown in the illustrated two example embodiments.

The variety of triggering mechanisms that may be used by the Node B for packet discarding during congestion are outside the scope of the present invention.

### List of reference signs

- FSN: frame sequence number, frame sequence number field
- H: frame header
- I1,I2,I3: branch, Iub/Iur link
- NB1,NB2,NB3: base station, Node B
- PL: frame payload
- SF1,SF2,SFn: subframe
- SRNC: serving radio network controller
- UE: user equipment, mobile station
- U1,..,U3: Uu radio links
- t: time

### List of used acronyms

- 3GPP: 3rd Generation Partnership Project
- FP: frame protocol
- FSN: Frame Sequence Number
- HSUPA: High Speed Uplink Packet Access
- E-DCH: Enhanced Dedicated CHannel
- Iub: interface between an RNC and a Node B
- Iur: logical interface between two RNCs
- MAC-d: medium access control dedicated
- MAC-es: medium access control for E-DCH in UE and RNC
- RNC: Serving Radio Network Controller
- RoT: Rise over Thermal
- SRNC: Serving Radio Network Controller
- PDU: protocol data unit
- RLS: radio link set
- TNL: transport network layer
- UTRAN: universal terrestrial radio access network
- Uu: radio interface between UTRAN and the UE

### List of quoted industry specifications

[1] 3GPP TS25.427 UTRAN
   3GPP Technical Specification Group Radio Access Network: "UTRAN Iur/Iub interface user plane protocol for DCH data streams"
[2] 3GPP TS25.309
   3GPP Technical Specification Group Radio Access Network: "FDD enhanced uplink; Overall description; Stage 2"
[3] 3GPP TR25.902
   3GPP Technical Specification Group Radio Access Network: "Iub/Iur congestion control"

## Claims

1. A method for controlling congestion over a non-serving branch (I2, 13) in a cellular telecommunication system, in which a mobile station (UE) has at least two radio links (U1, U2, U3) connecting to at least two respective base stations (NB1, NB2, NB3) ;
said at least two base stations (NB1, NB2, NB3) being connected to a serving radio network controller (SRNC) via at least two respective branches (I1, I2, I3); said at least two base stations (NB1, NB2, NB3) having the function of one serving base station (NB1) and at least one non-serving base station (NB2, NB3); said base stations (NB1, NB2, NB3) transmitting data frames with a given pattern of the sequence of frame sequence numbers (FSN) contained in headers (H) of the transmitted data frames;
said method comprising the steps of:
- by said serving radio network controller (SRNC), detecting a congestion over a congested branch (I1, I2, I3);
- by said serving radio network controller (SRNC), notifying the concerned base station (NB1, NB2, NB3) associated with said congested branch (I1, I2, I3) about the detected congestion;
said method being **characterized in that** it further comprises the step of:
a) if the congested branch (I2, I3) is non-serving, by the concerned non-serving base station (NB2, NB3), reducing the uplink rate over the congested branch (I2, I3) by discarding data packets to be transmitted; and
b) by the concerned non-serving base station (NB2, NB3), ensuring that said given pattern of the sequence of frame sequence numbers (FSN) of transmitted frames is not interrupted.

2. The method according to claim 1, wherein said step a) is performed by discarding data packets only from the payload of a frame.

3. The method according to any claim 1, wherein said step a) is performed by discarding whole frames.

4. A system having means for performing the steps of the method according to any of the claims 1 to 3.
